# EUROPÄISCHE PATENTSCHRIFT

(11) **EP 3 256 977 B1**
(45) Veröffentlichungstag und Bekanntmachung des Hinweises auf die Patenterteilung: **05.08.2020**
(21) Anmeldenummer: 16703787.8
(22) Anmeldetag: 10.02.2016
(51) Int. Cl.: G06F 21/33, G06F 21/35, G06F 21/62, H04L 29/06

(54) **COMPUTERIMPLEMENTIERTES VERFAHREN ZUR ZUGRIFFSKONTROLLE**
COMPUTER-IMPLEMENTED METHOD FOR ACCESS CONTROL
PROCÉDÉ MIS EN OEUVRE PAR ORDINATEUR POUR LE CONTRÔLE D'ACCÈS

(30) Priorität: 10.02.2015 DE 102015202308
(43) Veröffentlichungstag der Anmeldung: 20.12.2017
(73) Patentinhaber: Bundesdruckerei GmbH, 10969 Berlin (DE)
(72) Erfinder: MORGNER, Frank, 15537 Grünheide (DE); BASTIAN, Paul, 10243 Berlin (DE)
(74) Vertreter: Richardt Patentanwälte PartG mbB
(86) Internationale Anmeldenummer: PCT/EP2016/052798
(87) Internationale Veröffentlichungsnummer: WO 2016/128446

(56) Entgegenhaltungen:
- "Advanced Security Mechanisms for Machine Readable Travel Documents and eIDAS Token - Part 2", , 16. Dezember 2014 (2014-12-16), XP055257174, Gefunden im Internet: URL:https://www.bsi.bund.de/EN/Publication s/TechnicalGuidelines/TR03110/BSITR03110.h tml [gefunden am 2016-03-10]
- Bsi ET AL: "Advanced Security Mechanisms for Machine Readable Travel Documents and eIDAS Token", Part 3 - Common Specifications Version 2.20, 3. Februar 2015 (2015-02-03), XP055258090, Gefunden im Internet: URL:https://www.bsi.bund.de/SharedDocs/Dow nloads/EN/BSI/Publications/TechGuidelines/ TR03110/BSI_TR-03110_Part-3-V2_2.pdf?__blo b=publicationFile&v=1 [gefunden am 2016-03-14]
- Anonymous: "Advanced Security Mechanisms for Machine Readable Travel Documents and eIDAS Token - Part 3 - Common Specifications", , 12 March 2014 (2014-03-12), pages 1-98, XP055633521, Retrieved from the Internet: URL:https://www.bsi.bund.de/SharedDocs/Dow nloads/EN/BSI/Publications/TechGuidelines/ TR03110/BSI_TR-03110_Part-3-V2_2.pdf?__blo b=publicationFile&v=2 [retrieved on 2019-10-17]

## Beschreibung

Die Erfindung betrifft ein computerimplementiertes Verfahren zur Zugriffskontrolle, einen ID-Token, ein Verfahren zur Freigabe eines Zugriffs auf eine zugriffsbeschränkte Sicherungsanlage sowie ein Sicherheitssystem.

Sicherungsanlagen, beispielsweise Alarmanlagen oder Verriegelungsanlagen, haben sowohl im privaten als auch im gewerblichen Umfeld eine hohe Verbreitung gefunden. Sicherungsanlagen dienen beispielsweise dazu, ausschließlich einem vordefinierten Personenkreis Zutritt zu einem Gebäude oder einem Gebäudeteil zu ermöglichen. Damit eine bestimmte Person Zutritt zur Sicherungsanlage bekommt, ist eine Authentifizierung der Person gegenüber der Sicherungsanlage erforderlich.

Die Authentifizierung der Person kann beispielsweise mittels Passworteingabe über ein Terminal oder mittels einer Berechtigungskarte, die mit dem Terminal Daten austauscht, erfolgen. Aus der DE 10 20013 105 727 ist ein Verfahren zum Deaktivieren einer Sicherungsanlage unter Verwendung eines elektronisch auslesbaren Identifikationsdokumentes bekannt. Ferner beschreibt die technische Richtlinie TR-03110 verschiedene Sicherheitsmechanismen für maschinenlesbare Dokumente.

Die technische Richtlinie TR-03110-3 "Advanced Security Mechanisms for Machine Readable Travel Documents and eIDAS Token - Part 3", Version 2.20, offenbart ein Authentifizierungsverfahren, bei dem das Terminal eine Zertifikatskette an den eIDAS-Token sendet."

Die technische Richtlinie TR-03110-2 "Advanced Security Mechanisms for Machine Readable Travel Documents and eIDAS Token - Part 2", Version 2.20 beta2, offenbart die Verwaltung von Attributen auf einem Integrated Circuit Chip (ICC). Gemäß dieser Offenbarung präsentiert das Terminal einen Hash seines Seetor Public Key für den ICC.

Der Erfindung liegt die Aufgabe zugrunde, ein verbessertes computerimplementiertes Verfahren zur Kontrolle des Zugriffs auf ein in einem ID-Token gespeicherten Attributs, einen verbesserten ID-Token, ein verbessertes Verfahren zur Freigabe eines Zugriffs auf eine zugriffsbeschränkte Sicherungsanlage sowie ein verbessertes Sicherheitssystem zu schaffen.

Die der Erfindung zugrunde liegende Aufgaben werden durch die Merkmale der unabhängigen Patentansprüche gelöst. Bevorzugte Ausführungsformen der Erfindung sind in den abhängigen Patentansprüchen angegeben.

Ausführungsformen der Erfindung betreffen ein computerimplementiertes Verfahren zur Kontrolle des Zugriffs eines Terminals auf ein in einem gespeicherten Attribut, wobei der ID-Token einem Nutzer zugeordnet ist, wobei das Verfahren eine Authentisierung des Terminals durch den ID-Token umfasst, wobei die Authentisierung durch den ID-Token den Empfang eines permanenten Zertifikats des Terminals, das Ableiten eines Terminal-Hash-Wertes aus dem Zertifikat und ein Überprüfen umfasst, ob der Terminal-Hashwert in dem ID-Token gültig gespeichert ist. Im Falle dessen der Terminal-Hash-Wert in dem ID-Token gültig gespeichert ist, erfolgt eine Freigabe eines Zugriffs des Terminals auf das Attribut ohne eine weitere Überprüfung des permanenten Zertifikats des Terminals. Im Falle dessen hingegen der Terminal-Hash-Wert in dem ID-Token nicht gültig gespeichert ist, umfasst die Authentisierung durch den ID-Token:
- Ableiten einer ersten Signatur aus dem permanenten Zertifikat des Terminals und Verifizierung der ersten Signatur mit dem Terminal-Hash-Wert und einem dem permanenten Zertifikat zugehörigen öffentlichen Schlüssels des Terminals, wobei der Terminal-Hash-Wert einem Hash von Metadaten des Zertifikats umfasst,
- Empfang eines sitzungsgebundenen öffentlichen Schlüssels des Terminals,
- Erzeugung und Senden eines zufälligen ersten Geheimnisses an das Terminal,
- Empfang einer zweiten Signatur von dem Terminal und Verifizierung der zweiten Signatur unter Verwendung des sitzungsgebundenen öffentlichen Schlüssels des Terminals, des zufälligen ersten Geheimnisses und dem dem permanenten Zertifikat zugehörigen öffentlichen Schlüssel des Terminals,
- nach erfolgreicher Verifizierung der ersten und zweiten Signatur, Speichern des Terminal-Hash-Wertes in dem ID-Token und Freigabe des Zugriffs des Terminals auf das Attribut.

Der Begriff "ID-Token" bezeichnet eine Vorrichtung, wie beispielsweise ein tragbares elektronisches Gerät, zum Beispiel einen sogenannten USB-Stick, oder ein Dokument, insbesondere ein Wert- oder Sicherheitsdokument.

Unter einem "Dokument" werden papierbasierte und/oder kunststoffbasierte Dokumente verstanden, wie zum Beispiel Ausweisdokumente, insbesondere Reisepässe, Personalausweise, Visas sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung von zumindest einem Attribut integriert ist.

Unter einem "Attribut" wird im Folgenden ein Datenwert, zum Beispiel eine Zahl oder ein Text, verstanden. Bei dem Attribut kann es sich um eine Angabe bezüglich der Identität eines Nutzers handeln, dem der ID-Token zugeordnet ist, insbesondere bezüglich dessen sogenannter digitaler Identität. Beispielsweise können Name, Vorname, Adresse des Nutzers Attribute darstellen. Ein Attribut kann auch Daten beinhalten, die zur Überprüfung der Berechtigung des Nutzers zur Inanspruchnahme eines bestimmten Online-Dienstes dienen, wie zum Beispiel das Alter des Nutzers, wenn dieser einen Onlinedienst in Anspruch nehmen möchte, der einer bestimmten Altersgruppe vorbehalten ist, oder ein anders Attribut, welches die Zugehörigkeit des Nutzers zu einer bestimmten Gruppe dokumentiert, welche zur Nutzung des Onlinedienstes berechtigt ist. Ein "Attribut" kann auch einen Datenwert bezeichnen, welcher eine Zugangsberechtigung zu einer zugriffsbeschränkten Sicherungsanlage umfasst. In diesem Zusammenhang kann das Attribut ebenfalls eine bestimmte Gruppenzugehörigkeit angeben, wobei der Zugriff auf die zugriffsbeschränkte Sicherungsanlage von der besagten Gruppenzugehörigkeit abhängt.

Eine zugriffsbeschränkte Sicherungsanlage wird im Rahmen der vorliegenden Beschreibung als eine Einrichtung verstanden, die den Zugang zu bestimmten räumlichen Bereichen oder auch den Zugriff auf bestimmte Daten kontrolliert. Ein Zugriff ist nur nach Nachweis einer entsprechenden Berechtigung mittels des ID-Tokens möglich.

Ein Authentifizierungsserver ist ein Server, welcher die hierzu notwendigen Berechtigungen verwaltet und gegebenenfalls gegenüber einer internen Datenbank abgleicht.

Unter einem "statischen" Schlüssel wird im Folgenden ein kryptografischer Schlüssel bzw. Datenwert verstanden, welcher in einem nichtflüchtigen Speichermedium gespeichert ist und für mehr als nur einer Sitzung Verwendung finden kann. Im Gegensatz dazu werden Sitzungsschlüssel bzw. sitzungsgebundene, temporäre Schlüssel bzw. Datenwerte nur für eine Sitzung generiert und nicht permanent gespeichert, sodass sie in einer weiteren Sitzung nicht mehr verwendet werden können.

Ausführungsformen der Erfindung könnten den Vorteil haben, dass der Zugriff des Terminals auf das Attribut in besonders sicherer Weise seitens des ID-Tokens kontrolliert werden kann. Die Gefahr eines unberechtigten Zugriffs auf das Attribut wird also minimiert. Trotz der hohen Sicherheit könnte die Geschwindigkeit, mit welcher die Zugriffskontrolle seitens des ID-Tokens erfolgt, hoch sein, da nicht für jeden Zugriffsversuch des Terminals auf das Attribut die obig beschriebenen Signaturüberprüfungen durchgeführt werden müssen. Solange der Terminal-Hash-Wert in dem ID-Token gültig gespeichert ist, werden die besagten Signaturüberprüfungen und zum Beispiel damit verbundene elliptische Kurvenoperationen, welche Zeit und Energie kosten, vermieden. Stattdessen erfolgt ein schneller Speicherzugriff auf einen entsprechenden Speicherbereich des IT-Tokens, um nach Überprüfung der Gültigkeit des Hash-Werts in dem ID-Token den Zugriff des Terminals auf das Attribut ohne weitere Überprüfung des permanenten Zertifikats des Terminals zu ermöglichen.

Nach einer Ausführungsform der Erfindung umfassen die Metadaten eine Zugriffsberechtigung, wobei durch den ID-Token
- im Fall dessen der Terminal-Hash-Wert in dem ID-Token nicht gültig gespeichert ist nach der erfolgreichen Verifizierung der ersten und zweiten Signatur die Zugriffsberechtigung verknüpft mit dem Terminal-Hash-Wert in dem ID-Token gespeichert wird und die Freigabe des Zugriffs des Terminals auf das Attribut entsprechend der Zugriffsberechtigung erfolgt,
- im Falle dessen der Terminal-Hash-Wert in dem ID-Token gültig gespeichert ist, die dem Terminal-Hash-Wert verbundene gespeicherte Zugriffsberechtigung gelesen wird, kann die Freigabe des Zugriffs des Terminals auf das Attribut entsprechend der Zugriffsberechtigung erfolgt.

Dies könnte den Vorteil haben, dass über das Zertifikat des Terminals bereits im Voraus festgelegt werden kann, wie und auf welche Attribute das Terminal Zugriff erhalten soll. Beispielsweise können spezifische Attribute angegeben werden, sodass insgesamt nicht ein Vollzugriff auf sämtliche im ID-Token gespeicherten Attribute erfolgt, sondern nur auf eine beschränkte Auswahl hiervon. Ferner kann die Zugriffsberechtigung eine Angabe dahingehend enthalten sein, ob nur ein Lesezugriff, oder ein Lese- und Schreibzugriff gegeben ist.

In einer konkreten Anwendung könnte es denkbar sein, dass das besagte Terminal in einem Sicherheitssystem zum Einsatz kommt, bei welchem das Terminal mit einer zugriffsbeschränkten Sicherungsanlage gekoppelt ist. Bei erstmaliger Benutzung des ID-Tokens zum Zugang zur Sicherungsanlage könnte das Terminal eine entsprechende Zugangsberechtigung als Attribut in dem ID-Token speichern. Für diesen erstmaligen Speicherzugriff benötigt das Terminal eine entsprechende Zugriffsberechtigung. Ferner ist es denkbar, dass das Terminal in nachfolgenden Kommunikationsvorgängen mit dem ID-Token auch die Berechtigung behalten muss, die Möglichkeit des Zugriffs auf die Sicherungsanlage durch beispielsweise Entzug der Zugangsberechtigung zu unterbinden oder einzuschränken.

Nach einer Ausführungsform ist dem permanenten Zertifikat ein permanenter öffentlicher Schlüssel des Terminals zugeordnet, wobei durch den ID-Token im Falle dessen der Terminal-Hash-Wert in dem ID-Token nicht gültig gespeichert ist, nach der erfolgreichen Verifizierung der ersten und zweiten Signatur der permanente öffentliche Schlüssel verknüpft mit dem Terminal-Hash-Wert in dem ID-Token gespeichert wird und eine weitere Kommunikation mit dem Terminal verschlüsselt unter Verwendung des permanenten öffentlichen Schlüssels des Terminals erfolgt. Im Falle dessen hingegen der Terminal-Hash-Wert in dem ID-Token gültig gespeichert ist, wird der mit dem Terminal-Hash-Wert verknüpfte gespeicherte permanente öffentliche Schlüssel des Terminals gelesen und eine weitere Kommunikation mit dem Terminal erfolgt verschlüsselt unter Verwendung des permanenten öffentlichen Schlüssels des Terminals. Zum Beispiel ist der permanente öffentliche Schlüssel in dem permanenten Zertifikat enthalten, wobei der Terminal-Hash-Wert einen Hash des permanenten öffentlichen Schlüssels umfasst.

Dies könnte den Vorteil haben, dass die Geschwindigkeit der Authentisierung des Terminals durch den ID-Token weiter erhöht wird, da im Falle dessen der Terminal-Hash-Wert in dem ID-Token gültig gespeichert ist, ein erneuter Austausch in Form einer Datenübertragung des permanenten öffentlichen Schlüssels des Terminals entfällt. Der permanente öffentliche Schlüssel des Terminals kann direkt aus dem Speicher des ID-Tokens gelesen werden und für die weitere Kommunikation mit dem Terminal Verwendung finden. Dadurch, dass der permanente öffentliche Schlüssel des Terminals in dem permanenten Zertifikat enthalten ist, wird dieser im Rahmen der Authentisierung automatisch empfangen und kann in Verbindung mit dem Terminal-Hash-Wert weitere Verwendung finden, ohne dass hierzu ein separater Datenaustauschschritt bezüglich des permanenten öffentlichen Schlüssels notwendig wäre. Da der Terminal-Hash-Wert den Hash des permanenten öffentlichen Schlüssels umfasst, ist außerdem sichergestellt, dass der Terminal-Hash-Wert in eindeutiger Weise dem besagten Terminal zugeordnet werden kann. Da davon auszugehen ist, dass der öffentliche Schlüssel einzigartig ist, ist sichergestellt, dass aufgrund des Eingehens des permanenten öffentlichen Schlüssels in den Terminal-Hash-Wert auch der Terminal-Hash-Wert selbst eine Einzigartigkeit besitzt und damit eine eindeutige Identifikation des Terminals und damit eine eindeutige Authentifizierung des Terminals gewährleistet werden kann.

Nach einer Ausführungsform der Erfindung wird durch den ID-Token im Falle dessen der Terminal-Hash-Wert in dem ID-Token nicht gültig gespeichert ist, nach der erfolgreichen Verifizierung der ersten und zweiten Signatur der permanente öffentliche Schlüssel verknüpft mit einem Zeitstempel in dem ID-Token gespeichert, wobei der Zeitstempel eine maximale Gültigkeitsdauer des Terminal-Hash-Werts angibt. Im Falle dessen der Terminal-Hash-Wert in dem ID-Token gespeichert ist, wird hingegen der mit dem Terminal-Hash-Wert verknüpfte gespeicherte Zeitstempel gelesen und eine gültige Speicherung des Terminal-Hash-Wert ist nur dann gegeben, wenn der Zeitstempel noch gültig ist. Die maximale Gültigkeitsdauer könnte jedoch auch durch eine maximale Anzahl von Zugriffen des Terminals auf den ID-Token gegeben sein.

Zum Beispiel weisen die Metadaten nach einer Ausführungsform der Erfindung den Zeitstempel auf.

Nach einer weiteren Ausführungsform der Erfindung ist es möglich, dass der Zeitstempel für das Speichern des Terminal-Hash-Werts in dem ID-Token erzeugt wird, wobei der Zeitstempel auf Basis einer vordefinierten relativen Gültigkeitsdauer erzeugt wird. Die besagte relative Gültigkeitsdauer, welche vordefiniert ist, könnte beispielsweise eine Zeitdauer wie ein Jahr, sechs Monate, 24 Stunden umfassen, wobei zum Beispiel mit dem Speichern des Terminal-Hash-Wertes eine Systemzeit des Terminals oder des ID-Tokens herangezogen wird, und die relative Gültigkeitsdauer der Systemzeit hinzuaddiert wird. Hieraus ergibt sich die maximale Gültigkeitsdauer in Form eines absoluten Zeitwertes, z.B. eines Ablaufdatums. Im Falle dessen es sich bei dem Metadaten um einen Zeitstempel handelt, kann damit die Gültigkeitsdauer des Zugriffs des Terminals auf das Attribut ausgehend von einem initialen Zeitpunkt für eine bestimmte Zeitdauer ohne weitere Authentisierung und in Verwendung der ersten Signatur, des sitzungsgebundenen öffentlichen Schlüssels, des Geheimnisses usw. durchgeführt werden. Die vollständige Authentisierung erfolgt also in diesem Fall nicht ständig, sondern nur zu vordefinierten Zeitpunkten.

Ein konkretes Anwendungsbeispiel könnte das obig beschriebene Sicherheitssystem darstellen, bei welchem ein Authentifizierungsserver die finale Überprüfung des Attributs und die Freigabe eines Zugriffs auf die Sicherungsanlage durchführt. Das Terminal arbeitet hier also lediglich als Schnittstelle zwischen ID-Token und Authentifizierungsserver und sorgt dafür, dass der ID-Token sicher sein kann, dass er mit einer vertrauenswürdigen Instanz (Terminal) kommuniziert. Sobald der Authentifizierungsserver erstmalig die Freigabe des Zugriffs auf die Sicherungsanlage erteilt hat, könnte über das Terminal ein entsprechendes Attribut im ID-Token gespeichert werden, welches für einen bestimmten Zeitraum den weiteren Zugriff auf die Sicherungsanlage ohne weitergehende und zusätzliche aufwendige Authentisierung ermöglicht.

Grundsätzlich ist es auch möglich, dass die Metadaten wie obig beschrieben den Zeitstempel aufweisen, wobei in diesem Fall das Terminal selbst festlegt, in welchen zeitlichen Abständen eine vollständige Authentisierung des Terminals durch den ID-Token zu erfolgen hat.

Nach einer Ausführungsform wird das permanente Zertifikat des Terminals in einer ersten Nachricht durch den ID-Token von dem Terminal empfangen, wobei die erste Nachricht ein Wurzelzertifikat umfasst, wobei im Falle dessen der Terminal-Hash-Wert in dem ID-Token nicht gültig gespeichert ist, die Authentisierung durch den ID-Token ferner eine Verifizierung des permanenten Zertifikats des Terminals über das Wurzelzertifikat mittels eines auf dem ID-Token gespeicherten öffentlichen Schlüssels einer Wurzelzertifizierungsstelle umfasst, wobei erst nach erfolgreicher Verifizierung des permanenten Zertifikats des Terminals über das Wurzelzertifikat das Speichern des Terminal-Hash-Wertes in dem ID-Token und Freigabe des Zugriffs des Terminals auf das Attribut erfolgt.

Dies könnte den Vorteil haben, dass durch eine zentrale vertrauenswürdige Instanz (Wurzelzertifizierungsstelle) festgelegt werden kann, in welcher Weise der Zugriff auf das Attribut erfolgen kann. Da üblicherweise der Wurzelzertifizierungsstelle von sowohl dem ID-Token als auch dem Terminal vertraut wird, kann der ID-Token davon ausgehen, dass sämtliche in den Metadaten enthaltenen Informationen insbesondere aus datenschutzrechtlichen Gründen als akzeptabel anzusehen sind. Befinden sich auf dem ID-Token beispielsweise auch sensitive persönliche Informationen wie ein Geburtsdatum, biometrische Informationen, eine Wohnadresse und vieles mehr, muss ein Benutzer des ID-Tokens kein Sorge haben, dass das Terminal unbefugt in Besitz von entsprechenden Attributen gelangt, welche der Nutzer des ID-Tokens dem Terminal überhaupt nicht zur Verfügung gestellt hätte. Durch die Absicherung des Vertrauens einer zentralen Wurzelzertifizierungsstelle ist insofern sichergestellt, dass ein Missbrauch des ID-Tokens durch das Terminal unterbunden bleibt.

Nach einer Ausführungsform wird die erste Nachricht ohne eine vorherige von dem Terminal empfangene Ankündigung oder Referenz der Zertifizierungsstelle des permanenten Zertifikats empfangen. Die Verwendung von MSE:Set DST zur Auswahl der Wurzelzertifizierungsstelle des Terminals entfällt also und stattdessen arbeitet der ID-Token grundsätzlich mit einer einzigen Wurzelzertifizierungsstelle.

Dem Terminal ist das bekannt, sodass die Auswahl eines für eine spezifische Zertifizierungsstelle zugeschnittenen Zertifikats des Terminals auf Seiten des ID-Tokens entfällt und damit ein zusätzlicher Datenübertragungsschritt vom ID-Token zum Terminal zur Anforderung der zugehörigen Referenz der Zertifizierungsstelle des permanenten Zertifikats entfällt. Auch dies könnte den Prozess der Authentisierung weiter beschleunigen.

Nach einer weiteren Ausführungsform der Erfindung wird das erste Geheimnis ohne eine explizite Anforderung des Terminals abwartend, automatisch nach Empfang des sitzungsgebundenen öffentlichen Schlüssels des Terminals erzeugt und an das Terminal gesendet. Anstatt also explizit nach einem MSE:Set AT seitens des Terminals mit einem zusätzlichen Kommando "Get Challenge" das erste Geheimnis anzufordern, wird seitens des ID-Tokens das erste Geheimnis ohne die besagte explizite Anforderung "Get Challenge" automatisch nach Empfang des sitzungsgebundenen öffentlichen Schlüssels oder nach Empfang des MSE:Set AT an das Terminal gesendet. Auch dies spart wiederum einen weiteren Kommunikationsschritt zwischen ID-Token und Terminal, sodass die Authentifizierung auch in diesem Punkt beschleunigt werden könnte.

Nach einer weiteren Ausführungsform der Erfindung umfasst das Verfahren ferner eine Authentisierung des ID-Tokens gegenüber dem Terminal, wobei die Authentisierung des IT-Tokens umfasst:
- Senden des öffentlichen Schlüssels des IT-Tokens und einen zu dem öffentlichen Schlüssel zugehörigen Domainparameter an das Terminal, wobei entweder der öffentliche Schlüssel des IT-Tokens automatisch und ohne eine vorherige explizite Anforderung seitens des Terminals gesendet wird oder der ID-Token über mehrere der verschiedenen öffentlichen Schlüssel verfügt, einer dieser verschiedenen öffentlichen Schlüssel als Standardschlüssel definiert ist und bei Empfang einer allgemeiner Anforderung eines öffentlichen Schlüssels seitens des Terminals der Standardschlüssel als der öffentliche Schlüssel des IT-Tokens an das Terminal gesendet wird,
- Berechnen eines mit dem Terminal gemeinsamen zweiten Geheimnisses aus dem privaten Schlüssel des IT-Tokens, dem sitzungsgebundenen öffentlichen Schlüssels des Terminals und den Domainparameter,
- Erzeugen eines zufälligen dritten Geheimnisses, Senden des zufälligen dritten Geheimnisses an das Terminal und Berechnen eines symmetrischen Sitzungsschlüssels aus dem dritten Geheimnis und dem mit dem Terminal gemeinsamen zweiten Geheimnis,
wobei die weitere nachfolgende Kommunikation mit dem Zugriff auf das Attribut verschlüsselt mit dem symmetrischen Sitzungsschlüssel erfolgt.

Nach dem obig beschrieben "Terminal Authentication" erfolgt also der Prozess der "Chip Authentication", wobei jedoch auch hier zur Einsparung von Kommunikationsschritten der öffentliche Schlüssel des IT-Tokens automatisch und ohne eine vorherige explizite Anforderung seitens des Terminals gesendet wird. So muss beispielsweise in einem MSE:Set AT des Terminals keine explizite Referenz des Schlüssels enthalten sein, dessen Besitz bewiesen werden soll. Es genügt ein MSE:Set AT und der ID-Token wird automatisch seinen einzelnen öffentlichen Schlüssel an das Terminal senden oder im Falle des Verfügens über mehrere verschiedene öffentliche Schlüssel einen seitens des ID-Tokens als "Standard" definierten öffentlichen Schlüssel an das Terminal senden. Das Terminal übermittelt also nicht mehr explizit die Referenz des Schlüssels, für den der ID-Token die Kenntnis seines privaten Schlüssels beweisen soll.

Es sei angemerkt, dass zur Umsetzung dieser Ausführungsform entweder auf die Angabe der Referenz des Schlüssels, dessen Besitz bewiesen werden soll, im MSE:Set AT-Kommando verzichtet werden kann, oder es kann sogar gänzlich auf das Übermitteln des MSE:Set AT-Kommandos seitens des Terminals verzichtet werden.

Der eigentliche Beweis des Besitzes des zum öffentlichen Schlüssel des IT-Tokens zugehörigen privaten Schlüssels erfolgt durch die besagten Schritte des Berechnens des gemeinsamen zweiten Geheimnisses, des zufälligen dritten Geheimnisses und des symmetrischen Sitzungsschlüssels. Nur wenn der ID-Token in der Lage ist, einen symmetrischen Sitzungsschlüssel zu berechnen, welcher mit einem in entsprechender Weise auf seitens des Terminals berechneten symmetrischen Sitzungsschlüssel identisch ist, kann die nachfolgende Kommunikation zwischen Terminal und ID-Token überhaupt mit dem Zugriff auf das Attribut verschlüsselt mit dem symmetrischen Sitzungsschlüssel erfolgen.

In einem weiteren Aspekt betrifft die Erfindung einen ID-Token mit einer Kommunikationsschnittstelle, einem Prozessor und einem computerlesbaren Speichermedium, wobei das Speichermedium computerlesbare Instruktionen enthält, welche bei Ausführung durch den Prozessor die Durchführung eines Verfahrens wie obig beschrieben bewirken.

In einem weiteren Aspekt betrifft die Erfindung ein Verfahren zur Freigabe eines Zugriffs auf eine zugriffsbeschränkte Sicherungsanlage mittels eines ID-Tokens, wobei das Verfahren umfasst:
- Durchführung des Verfahrens, wie obig beschrieben durch den ID-Token,
- nach Freigabe des Zugriffs des Terminals auf das Attribut, Lesen des Attributs durch das Terminal und Versenden einer Zugriffsanfrage an einen Authentifizierungsserver, wobei die Zugriffsanfrage das Attribut verschlüsselt umfasst,
- Entschlüsselung und Überprüfung des Attributs durch den Authentifizierungsserver, wobei der Authentifizierungsserver im Fall einer erfolgreichen Überprüfung den Zugriff auf die Sicherungsanlage freigibt. Anhand des Attributs ist zum Beispiel der Authentifizierungsserver in der Lage, über eine Freigabe oder Nichtfreigabe des Zugriffs auf die Sicherungsanlage zu entscheiden.

In einem weiteren Aspekt betrifft die Erfindung ein Sicherheitssystem umfasst einen obig beschriebenen ID-Token sowie eine zugriffsbeschränkte Sicherungsanlage, einen Terminal und einen Authentifizierungsserver,
- wobei das Terminal dazu ausgebildet, nach Freigabe des Zugriffs des Terminals auf das Attribut das Attribut zu lesen und eine Zugriffsanfrage an den Authentifizierungsserver zu versenden, wobei die Zugriffsanfrage das Attribut verschlüsselt umfasst,
- wobei der Authentifizierungsserver dazu ausgebildet ist, eine Entschlüsselung und Überprüfung des Attributs durchzuführen und im Fall einer erfolgreichen Überprüfung den Zugriff auf die Sicherungsanlage freizugeben.

Im Weiteren werden Ausführungsformen der Erfindung mit Bezugnahme auf die Zeichnungen näher erläutert. Es zeigen:
- Figur 1: ein Blockdiagramm eines Sicherheitssystems,
- Figur 2: ein Flussdiagramm eines Verfahrens zur Kontrolle des Zugriffs eines Terminals auf ein in einem ID-Token gespeicherten Attribut,
- Figur 3: ein Flussdiagramm eines Verfahrens zur Freigabe des Zugriffs auf eine zugriffsbeschränkte Sicherungsanlage mittels eines ID-Tokens.

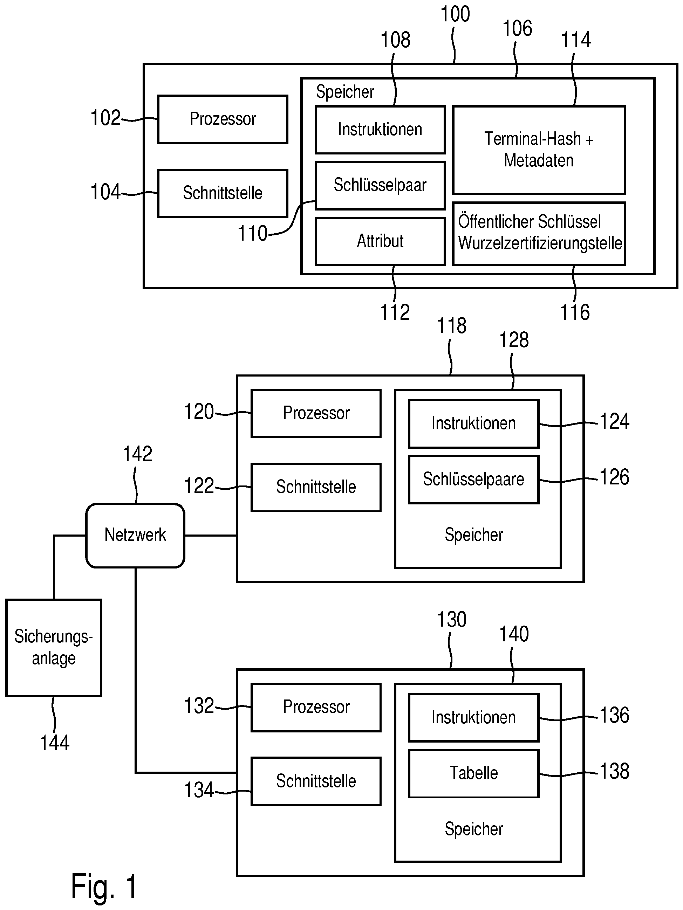

Die Figur 1 zeigt ein Blockdiagramm eines Sicherheitssystems umfassend einen ID-Token 100, ein Terminal 118, einen Authentifizierungsserver 130 sowie eine Sicherungsanlage 144. Der ID-Token kann mit dem Terminal 118 über eine kontaktbehaftete oder eine drahtlose Schnittstelle 104 auf Seiten des IT-Tokens 100 und einer Schnittstelle 122 seitens des Terminals 118 kommunizieren. Bei der Kommunikationsart kann es sich insbesondere um eine Nahfeldkommunikation, beispielsweise mittels RFID, Bluetooth oder WLAN handeln.

Die Schnittstelle 122 des Terminals 118, die Schnittstelle 134 des Authentifizierungsservers 130 und eine nicht weiter gezeigte Schnittstelle der Sicherungsanlage 144 können über ein Netzwerk 142 zur Kommunikation von Daten untereinander verwendet werden. Bei dem Netzwerk 142 kann es sich beispielsweise um das Internet handeln.

Die Sicherungsanlage 144 dient zur Sicherung des Zugriffs auf oder Zutritts in einen sensitiven Bereich. Beispielsweise könnte es sich bei diesem Bereich um einen räumlichen Bereich handeln und bei der Sicherungsanlage 144 könnte es sich um ein Schließsystem für z.B. eine Türe handeln. So könnte beispielsweise eine Freigabe eines Öffnens der Türe zu dem räumlichen Bereich durch die Sicherungsanlage 144 gesteuert werden. In einem anderen Beispiel dient die Sicherungsanlage 144 zum Schutz von Daten, welche in einer Datenbank gespeichert sind. In diesem Fall kontrolliert die Sicherungsanlage 144 den Zugriff auf die in der Datenbank gespeicherten Daten.

Der ID-Token 100 dient als "Schlüssel", um den Zutritt zu der Sicherungsanlage 144 zu erlangen. Hierzu verfügt ein Speicher 106 des IT-Tokens 100 über ein Attribut 112, welches, wie nachfolgend erläutert wird, an den Authentifizierungsserver 130 übertragen wird. Das Attribut 112 wird vom Authentifizierungsserver 130 dazu verwendet, über die Freigabe des Zugriffs auf Sicherungsanlage 144 für den Nutzer des ID-Tokens 100 zu entscheiden. Das nachfolgend beschriebene Verfahren sichert dabei, dass sich sowohl der ID-Token 100 als auch das Terminal 118 gegenseitig vertrauen und damit überhaupt einen gegenseitigen Datenaustausch miteinander zur Kommunikation des Attributs 112 ermöglichen.

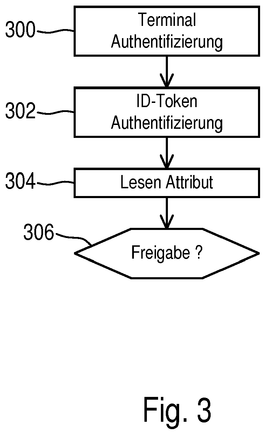

Wie im Flussdiagramm der Figur 3 ersichtlich ist, ist das Verfahren, welches zum Einsatz kommt, mehrstufig. Die Mehrstufigkeit des Verfahrens ist dabei teilweise aus der technischen Richtlinie TR-03110 des Bundesamts für Sicherheit in der Informationstechnik (BSI) bekannt.

Zunächst erfolgt in Schritt 300 eine sogenannte Terminal-Authentifizierung, bei welcher das Terminal ein Zertifikat an den ID-Token, beispielsweise eine Chipkarte, übertragen muss. Damit die Karte dieses übertragene Zertifikats validieren kann, muss das Terminal das oder die Zertifikate übertragen, welche dem ID-Token eine Verifizierung mittels des im ID-Token installierten Wurzelzertifikats ermögliche. Eine erfolgreiche Validierung des Zertifikats bedeutet für den ID-Token, dass das Terminal für einen weiteren Datenaustausch vertrauenswürdig ist. Dies ist daher die Grundvoraussetzung für die Durchführung der weiteren Schritte 302 bis 306.

Die ID-Token-Authentifizierung in Schritt 302 (auch Chip-Authentifizierung genannt) dient dem Nachweis, dass der ID-Token den privaten Schlüssel zu seinem dem Terminal zur Verfügung gestellten öffentlichen Schlüssel kennt. Falls dieser öffentliche Schlüssel auf dem ID-Token durch den Ausweissteller signiert vorliegt, bedeutet der erfolgreiche Abschluss des Protokolls zwischen Terminal und ID-Token, dass der Chip echt und nicht gefälscht ist.

Erst wenn die Schritte 300 und 302 erfolgreich abgeschlossen sind, kann das Terminal in Schritt 304 das Attribut 112 aus dem Speicher 106 des IT-Tokens 100 auslesen und mittels einer verschlüsselten Kommunikation dem Authentifizierungsserver 130 zur Verfügung stellen. Der Authentifizierungsserver 130 verfügt über einen Prozessor 132 und einen Speicher 140, wobei der Speicher 140 Programminstruktionen 136 aufweist. Die Programminstruktionen 136 dienen zum einen der verschlüsselten Kommunikation mit dem Terminal 118 über die Schnittstelle 134 und sie dienen zum anderen dazu, das Attribut 112 nach Empfang mit in einer Tabelle 138 gespeicherten Attributen abzugleichen. Beispielsweise könnte die Tabelle 138 eine Vielzahl von Attributen enthalten, welche zugehörige ID-Token in eindeutiger Weise identifizieren. Das Vorhandensein der Attribute in der Tabelle 138 steht dabei stellvertretend für eine Vertrauenswürdigkeit der zu diesen Attributen zugehörigen ID-Token 100, wobei den Nutzern dieser ID-Token 100 der Zugang zur Sicherungsanlage 144 gewährt wird.

Nachdem also im Schritt 304 nach der Terminal-Authentifizierung und der ID-Token-Authentifizierung das Attribut 112 gelesen wurde, findet in Schritt 306 mittels der Programminstruktionen 136 seitens des Authentifizierungsservers 130 eine Überprüfung statt, ob eine Freigabe des Zugriffs auf die Sicherungsanlage 144 erteilt werden darf oder nicht. Findet sich im vorliegenden Beispiel das Attribut 112 in der Tabelle 138, wird die Freigabe erteilt. Daraufhin wird beispielsweise ein Öffnungssignal im Falle einer Tür an die Sicherungsanlage 144 über das Netzwerk 142 gesendet. Im Fall des Zugriffs auf Daten wird ein entsprechendes Signal für die Freigabe eines Datenzugriffs an die Sicherungsanlage 144 übermittelt und die Sicherungsanlage erteilt daraufhin die Freigabe eines Zugriffs auf z.B. sensitive Bereiche einer Datenbank.

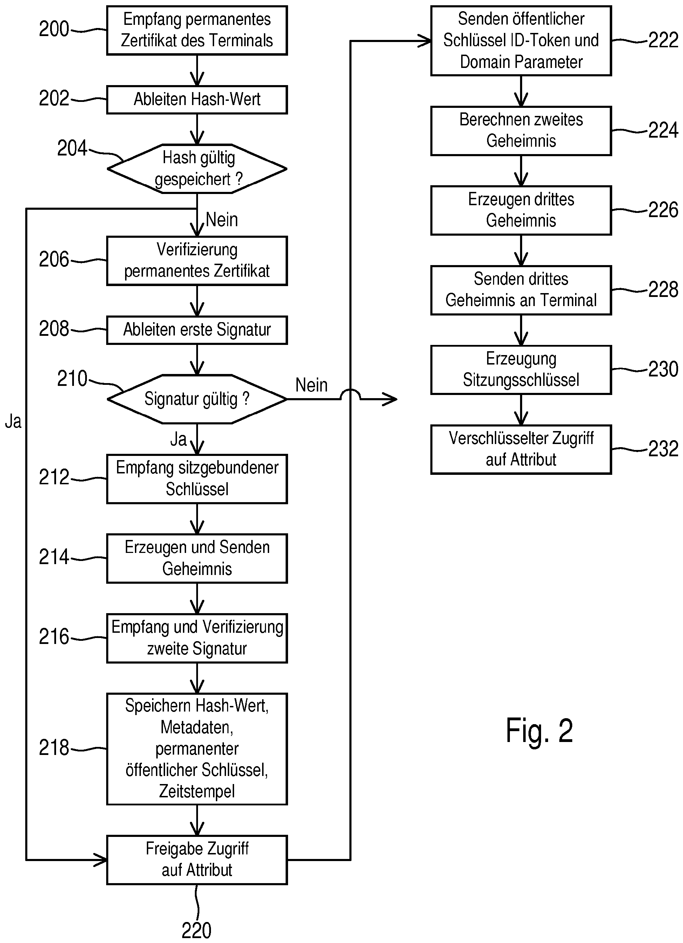

Bezug nehmend auf das Flussdiagramm, welches in Figur 2 gezeigt ist, sei im Folgenden beispielhaft erläutert, wie die obig beschriebene Terminal-Authentifizierung und ID-Token-Authentifizierung ablaufen können. Zunächst empfängt in Schritt 200 der ID-Token 100 über seine Schnittstelle 104 ein permanentes Zertifikat des Terminals. Aus dem permanenten Zertifikat kann daraufhin ein Hash-Wert in Schritt 202 abgeleitet werden. Das permanente Zertifikat umfasst beispielsweise den besagten Hash-Wert sowie eine Signatur, welche aus diesem Hash-Wert und einem privaten Signaturschlüssel sowie optionalen Metadaten gebildet wurde. Z.B. gilt, dass mittels eines dem permanenten Zertifikat zugehörigen öffentlichen Schlüssels daraufhin eine Authentisierung des Terminals 118 möglich ist.

Im Folgenden sei davon ausgegangen, dass der in Schritt 202 durch den ID-Token 100 abgeleitete Hash-Wert bisher noch nicht in einem Speicher 106 als Terminal-Hash-Wert 114 zusammen mit den zugehörigen Metadaten gespeichert ist. Diese Überprüfung erfolgt beispielsweise mittels eines Prozessors 102 des ID-Tokens 100, wobei in dem Speicher 106 weitere Programminstruktionen 108 enthalten sind, mittels welcher sämtliche bezüglich des ID-Tokens beschriebenen Schritte durchgeführt werden können.

Nachdem also angenommenermaßen in Schritt 204 festgestellt wurde, dass der Terminal-Hash-Wert 114 in dem ID-Token nicht gespeichert ist, erfolgt in den nachfolgenden Schritten eine vollständige Authentisierung des Terminals durch den ID-Token. So erfolgt in Schritt 206 eine Verifizierung des permanenten Zertifikats, indem eine erste Signatur aus dem permanenten Zertifikat des Terminals, welches in Schritt 200 empfangen wurde, abgeleitet wurde, und eine Verifizierung dieser ersten Signatur mit dem Terminal-Hash-Wert und einem dem permanenten Zertifikat zugehörigen öffentlichen Schlüssels des Terminals erfolgt. Der zugehörige permanente öffentliche Schlüssel des Terminals kann ebenfalls zusammen mit dem Zertifikat oder in dem Zertifikat des Terminals in Schritt 200 empfangen werden. Das Ableiten der ersten Signatur und die Verifizierung der ersten Signatur sind in den Schritten 208 und 210 beschrieben.

Optional ist es möglich, dass das permanente Zertifikat in Schritt 200 in einer ersten Nachricht vom Terminal empfangen wird, wobei diese besagte erste Nachricht ferner ein Wurzelzertifikat umfasst. Das permanente Zertifikat des Terminals kann dann zusätzlich nach Schritt 204 über das Wurzelzertifikat mittels eines auf dem ID-Token im Speicher 106 gespeicherten öffentlichen Schlüssels in einer Wurzelzertifizierungsstelle (Schlüssel 116) verifiziert werden. Damit wird sichergestellt, dass der permanente öffentliche Schlüssel des Terminals vertrauenswürdig ist.

Sofern im Schritt 210 festgestellt wird, dass die erste Signatur gültig ist und außerdem optional auch das permanente Zertifikat des Terminals gültig ist, wird das Verfahren fortgesetzt. Ansonsten kommt es nach Schritt 210 zu einem in Figur 2 nicht näher gezeigten Abbruch des Authentifizierungsverfahrens und die Authentifizierung ist fehlgeschlagen.

Wird das Verfahren fortgesetzt, so wird in Schritt 212 ein sogenannter sitzungsgebundener öffentlicher Schlüssel des Terminals 118 empfangen. Der sitzungsgebundene öffentliche Schlüssel des Terminals ist dabei ein Schlüssel, welcher speziell für die gegenwärtige Kommunikationssitzung zwischen ID-Token 100 und Terminal 118 Verwendung findet, also speziell für die aktuelle Kommunikation erzeugt wurde.

Nach Empfang des sitzungsgebundenen öffentlichen Schlüssels in Schritt 212 erfolgt in Schritt 214 das Erzeugen und Senden eines zufälligen ersten Geheimnisses vom ID-Token 100 an das Terminal 118. Dieses zufällige erste Geheimnis wird auch als "challenge" bezeichnet und dient daraufhin seitens des Terminals 118 dazu, eine Signatur zu erzeugen.

Das Terminal 118 verfügt ebenfalls über einen Prozessor 120 sowie einen Speicher 128. Im Speicher 128 sind Instruktionen 124 enthalten, welche es ermöglichen, die bezüglich des Terminals durchgeführten Schritte mittels des Prozessors auszuführen. Ebenfalls sind im Speicher 128 verschiedene Schlüsselpaare 126 gespeichert, beispielsweise der private und öffentliche Schlüssel des Terminals. Ferner sind im Speicher 128 die Zertifikate des Terminals gespeichert.

Nach dem in Schritt 214 der ID-Token das Geheimnis erzeugt und an das Terminal 118 gesendet hat, erzeugt daraufhin das Terminal eine Signatur unter Verwendung seines permanenten privaten Schlüssels, eines temporären (sitzungsgebundenen) öffentlichen Schlüssels, sowie des Geheimnisses. Das Terminal übermittelt daraufhin die so erzeugte Signatur an den ID-Token 100, welcher in Schritt 216 die Signatur empfängt und verifiziert. Die Verifizierung der vom Terminal empfangenen Signatur erfolgt durch den ID-Token 100 unter Verwendung des Geheimnisses, des dem permanenten Zertifikat zugehörigen öffentlichen Schlüssels des Terminals und dem temporären (sitzungsgebundenen) öffentlichen Schlüssel des Terminals.

Im Falle einer erfolgreichen Verifizierung dieser (zweiten) Signatur erfolgt anschließend in Schritt 218 ein Speichern des in Schritt 202 abgeleiteten Hash-Wertes zusammen mit den Metadaten, und dem permanenten öffentlichen Schlüssels des Terminals und einem optionalen Zeitstempel im ID-Token 100.

Es sei angemerkt, dass die obig beschriebenen Schritte 206 bis 216 in dem Standardprotokoll zur Terminal-Authentifizierung gemäß Richtlinie TR-03110 des BSI enthalten sind.

Nach Schritt 218 erfolgt schließlich die Freigabe des Zugriffs auf das Attribut 112 in Schritt 220.

Bevor jedoch diesbezüglich ein tatsächlicher Zugriff auf das Attribut erfolgt, wird in nachfolgenden Schritten noch eine zusätzliche ID-Token-Authentifizierung, entsprechend Schritt 302 der Figur 3 durchgeführt. So sendet der ID-Token in Schritt 222 seinen öffentlichen Schlüssel und einen für elektrische Kurvenkryptografie notwendigen Domainparameter an das Terminal 118. Im Gegenzug hierzu übermittelt das Terminal seinen sitzungsgebundenen öffentlichen Schlüssel an den ID-Token. Dies ermöglicht es sowohl dem ID-Token als auch dem Terminal, ein zweites Geheimnis in Schritt 224 zu erzeugen. In diese Erzeugung des zweiten Geheimnisses gehen auf Seiten des ID-Tokens der private Schlüssel des ID-Tokens, der sitzungsgebundene öffentliche Schlüssel des Terminals und der Domainparameter ein. Auf Seiten des Terminals gehen in die Berechnungen des zweiten Geheimnisses der sitzungsgebundene geheime Schlüssel des Terminals, der öffentliche Schlüssel des IT-Tokens und der Domainparameter ein. Es wird also auf jeder Seite unabhängig voneinander das gleiche zweite Geheimnis erzeugt.

Nachdem nun also beide Seiten das gemeinsame zweite Geheimnis berechnet haben, erzeugt in Schritt 226 der ID-Token ein drittes Geheimnis in zufälliger Weise und leitet aus diesem dritten Geheimnis unter Verwendung des zweiten Geheimnisses in Schritt 230 einen Sitzungsschlüssel ab. Außerdem wird in Schritt 228 das dritte Geheimnis an das Terminal übermittelt. Das Terminal selbst kann unter Verwendung des dort berechneten zweiten Geheimnisses und des nun empfangenen dritten Geheimnisses ebenfalls den Sitzungsschlüssel erzeugen.

Anschließend erfolgt in Schritt 232 ein verschlüsselter Zugriff durch das Terminal auf das Attribut statt, wobei die Verschlüsselung unter Verwendung des Sitzungsschlüssels erfolgt.

Wird nun der ID-Token in mehreren zeitlich auseinanderliegenden Sitzungen zum Zugriff auf das Sicherungsanlage verwendet, kann eine modifizierte Authentisierung des Terminals durch den ID-Token zum Einsatz kommen. Beispielsweise könnte bei einem erstmaligen Zugriff auf die Sicherungsanlage das Protokoll der Terminal-Authentifizierung vollständig mit den besagten Schritten 206 bis 218 zum Einsatz kommen, wohingegen bei einem späteren Versuch, mittels des ID-Tokens 100 auf die Sicherungsanlage 144 Zugriff zu erlangen, die Authentisierung des Terminals in einer modifizierten Weise ablaufen könnte. Hierzu ist vorgesehen, dass der ID-Token 100 nach Ableiten des Hash-Werts in Schritt 202 seinen Speicher 106 dahingehend überprüft, ob ein Terminal-Hash-Wert 114 aus einer früheren Authentisierung resultierend gespeichert ist. Ist dies der Fall, so wird anstatt mit dem Schritt 206 sofort mit dem Schritt 220 fortgefahren. Durch das "Cashen" des Terminal-Hash-Wertes in Schritt 218 kann also der ID-Token feststellen, dass in einem vorigen Authentisierungsversuch des Terminals gegenüber dem ID-Token der ID-Token das Terminal als vertrauenswürdig eingestuft hat.

Um nun nicht für alle Zeit die Vertrauenswürdigkeit des Terminals annehmen zu müssen, kann insbesondere der Hash-Wert zusammen mit einem Ablaufdatum oder einer Gültigkeitsdauer in dem ID-Token gespeichert werden. Der Hash-Wert wird also in dem ID-Token mit einem Zeitstempel verknüpft abgelegt. Der Zeitstempel könnte beispielsweise ein Ablaufdatum des Terminal-Hash-Wertes angeben. Ist dieses Ablaufdatum zeitlich unterschritten, so wird trotz des Vorhandenseins des Terminal-Hash-Werts 114 im Speicher 106 des IT-Tokens keine Gültigkeit mehr gegeben sein, sodass die Folge von Schritte 204 die erneute Durchführung der Authentifizierung des Terminals mit den Schritten 206 bis 218 erfolgen muss.

Die Gültigkeitsdauer des ID-Tokens kann auch in einer Anzahl von zeitlich auseinanderliegenden Sitzungen festgelegt sein. Erst nach deren Erreichen dieser Anzahl von Sitzungen ist eine erneute vollständige Authentisierung notwendig.

Ebenfalls kann vorgesehen sein, dass zusammen mit dem Terminal-Hash-Wert jene Metadaten in dem Speicher 106 des IT-Tokens 100 gespeichert werden, welche zusammen mit dem permanenten Zertifikat des Terminals in Schritt 200 durch den ID-Token 100 entfallen werden. Gegebenenfalls kann auch nur ein Teil der Metadaten dort gespeichert werden. Die Metadaten können beispielsweise eine Zugriffsberechtigung angeben, bezüglich welches der im Speicher 106 befindlichen Attribute 112 das Terminal zugreifen möchte. Insofern könnten mit der Feststellung in Schritt 204, dass der Terminal-Hash-Wert gültig im ID-Token gespeichert ist, auch die mit dem Terminal-Hash-Wert verknüpft gespeicherten und zugehörigen Metadaten aus dem Speicher 106 ausgelesen werden. Diese Metadaten könnten dann für die weitere Kommunikation mit dem Terminal herangezogen werden. Neben Zugriffsberechtigungen können die Metadaten auch eine eindeutige ID des Terminals umfassen.

Weiter kann verknüpft mit dem Terminal-Hash-Wert der permanente öffentliche Schlüssel des Terminals im Speicher 106 gespeichert sein. Wird also festgestellt, dass der Hash-Wert im Schritt 204 gültig gespeichert ist, kann der mit dem Terminal-Hash-Wert verknüpft gespeicherte öffentliche Schlüssel gelesen und auch hier für die weitere Kommunikation mit dem Terminal verwendet werden.

Es sei an dieser Stelle angemerkt, dass im Rahmen der gesamten Beschreibung keine Unterscheidung getroffen wird zwischen Schlüsseln in komprimierter und unkomprimierter Form. Je nach Anforderung wird der Fachmann dazu in der Lage sein, mit komprimierten oder unkomprimierten Formen der genannten Schlüssel zu arbeiten. Dies betrifft insbesondere den sitzungsgebundenen Schlüssel des Terminals, welcher üblicherweise im Rahmen der Terminal-Authentifizierung (Schritt 212) in komprimierter Form vom ID-Token empfangen und verarbeitet wird.

Der Authentifizierungsserver 130 ist in der Lage, mit dem Terminal 118 über die Schnittstelle 134 und das Netzwerk 142 zu kommunizieren. Eine Kommunikation zwischen Terminal 118 und Authentifizierungsserver 130 erfolgt unter Verwendung einer Verschlüsselung, sodass das Terminal eine Zugriffsanfrage bezüglich eines Zugriffs auf die Sicherungsanlage 144 an den Authentifizierungsserver 130 richtet, wobei die Zugriffsanfrage das Attribut 112 in verschlüsselter Weise umfasst. Beispielsweise kann auch eine Ende-zu-Ende-Verschlüsselung zum Einsatz kommen.

Um insgesamt die Zugriffsgeschwindigkeit des Terminals 118 auf das Attribut 112 weiter zu erhöhen, könnten verschiedene Optimierungen durchgeführt werden. So könnte beispielsweise darauf verzichtet werden, eine Referenz der Zertifizierungsstelle bezüglich des permanenten Zertifikats dem ID-Token 100 mitzuteilen. Wird stattdessen festgelegt, dass grundsätzlich eine einzige Zertifizierungsstelle hierzu zum Einsatz kommt, kann auf die Ankündigung der Referenz der Zertifizierungsstelle seitens des Terminals verzichtet werden und eine dementsprechend gegebenenfalls notwendige Anforderung derselben seitens des ID-Tokens entfällt ebenfalls. Damit wird auch das Volumen reduziert und damit die Datenübertragungsgeschwindigkeit insgesamt erhöht. Das MSE:Set DST-Kommando seitens des Terminals wird damit teilweise oder gar vollständig hinfällig.

Eine weitere Möglichkeit besteht darin, Schritt 214 mit Erzeugen und Senden des Geheimnisses automatisch durchzuführen, nachdem in Schritt 212 der sitzungsgebundene Schlüssel empfangen wurde. Schritt 214 erfolgt damit unmittelbar auf Schritt 212, ohne dass insbesondere ein Kommando der Art "Get Challenge" seitens des Terminals an den ID-Token übermittelt wurde.

Ein weiterer Geschwindigkeitsgewinn könnte darin liegen, dass im Rahmen der ID-Token-Authentifizierung auf eine konkrete Anforderung durch das Terminal je nach Referenz des öffentlichen Schlüssels des ID-Tokens verzichtet wird, dessen Besitz durch den ID-Token bewiesen werden soll. Zum Beispiel könnte auf die Verwendung des MSE:Set AT-Kommandos seitens des Terminals vollständig verzichtet werden. Stattdessen sendet der ID-Token den öffentlichen Schlüssel und den zum öffentlichen Schlüssel zugehörigen Domainparameter automatisch an das Terminal, nachdem zum Beispiel Schritt 220 erfolgt ist bzw. allgemein, nachdem die Terminal-Authentifizierung in Schritt 300 erfolgreich abgeschlossen wurde.

Verfügt der ID-Token über mehrere verschiedene öffentliche Schlüssel, so wird einer dieser Schlüssel im Voraus als Standard definiert und bei Ausbleiben einer expliziten Anforderung des Schlüssels seitens des Terminals wird der besagte Standardschlüssel verwendet und in Schritt 222 gesendet. Das automatische, ohne vorherige explizite Anforderung, Senden des öffentlichen Schlüssels und vorzugsweise ebenfalls des Domainparameters kann beispielsweise als Reaktion auf den Erhalt eines "General Authenticate" Kommandos des Terminals erfolgen.

Weitere Optimierungen könnten darin liegen, dass aus Sicherheitsgründen elliptische Kurven verwendet werden mit einem q, welcher mindestens eine Bitlänge von 224 Bits aufweist, um das Terminal-Zertifikat zu signieren und während der ID-Token-Authentifizierung den symmetrischen Sitzungsschlüssel zu erzeugen. Ferner könnte die Anforderung an den symmetrischen Sitzungsschlüssel dahingehend gewählt werden, dass ein AES-128-Schlüssel zum Einsatz kommt.

Die obig beschriebenen Hash-Verfahren könnten unter Verwendung eines SAH-256-Hash-Algorithmus durchgeführt werden, zumal SAH-224 im Vergleich zu SAH-224 denselben Rechenaufwand zur Hash-Berechnung bei höherer Sicherheit aufweist.

Eine weitere Möglichkeit der Beschleunigung, insbesondere der Verifizierung des permanenten Zertifikats des Terminals durch den ID-Token könnte darin liegen, dass lediglich eine "Ein-Schritt-Hierarchie" bezüglich des Wurzelzertifikats zum Einsatz kommt. Es könnte also auf entsprechende Zwischenzertifikate verzichtet werden und insofern ist hier die Anforderung lediglich darin zu sehen, dass der ID-Token endlich ein einzelnes Wurzelzertifikat aufweist, um damit vollständig die Verifizierung des Zertifikats des Terminals durchzuführen.

Um weiter den Datenaustausch zwischen Terminal und ID-Token zu minimieren, könnte das permanente Zertifikat des Terminals ohne jegliche Zertifikatserweiterung (Certificate Extensions) versendet werden. Außerdem sollten die kleinsten X.509-Zertifikate bezüglich der Wurzelzertifizierungsstelle und der Zertifizierungsstelle zum Einsatz kommen, welche die Zertifikate des ID-Tokens signiert.

### Bezugszeichenliste

- 100: ID-Token
- 102: Prozessor
- 104: Schnittstelle
- 106: Speicher
- 108: Instruktionen
- 110: Schlüsselpaar
- 112: Attribut
- 114: Terminal-Hash-Wert und Metadaten
- 116: öffentlicher Schlüssel der Wurzelzertifizierungsstelle
- 118: Terminal
- 120: Prozessor
- 122: Schnittstelle
- 124: Instruktionen
- 126: Schlüsselpaar
- 128: Speicher
- 130: Authentifizierungsserver
- 132: Prozessor
- 134: Schnittstelle
- 136: Instruktionen
- 138: Tabelle
- 140: Speicher
- 142: Netzwerk
- 144: Sicherungsanlage

## Patentansprüche

1. Computerimplementiertes Verfahren zur Kontrolle des Zugriffs eines Terminals (118) auf ein in einem ID-Token (100) gespeicherten Attribut (112), wobei der ID-Token (100) einem Nutzer zugeordnet ist, wobei das Verfahren eine Authentisierung des Terminals (118) durch den ID-Token (100) umfasst, wobei die Authentisierung durch den ID-Token (100) den Empfang eines permanenten Zertifikats des Terminals (118), das Ableiten eines Terminal Hash-Wertes aus dem Zertifikat und ein Überprüfen umfasst, ob der Terminal Hash-Wert in dem ID-Token (100) gültig gespeichert ist, wobei im Falle dessen der Terminal Hash-Wert in dem ID-Token (100) gültig gespeichert ist eine Freigabe eines Zugriffs des Terminals (118) auf das Attribut (112) ohne eine weitere Überprüfung des permanenten Zertifikats des Terminals (118) erfolgt, wobei im Falle dessen der Terminal Hash-Wert in dem ID-Token (100) nicht gültig gespeichert ist die Authentisierung durch den ID-Token (100) umfasst:
- Ableiten einer ersten Signatur aus dem permanenten Zertifikat des Terminals (118) und Verifizierung der ersten Signatur mit dem Terminal Hash-Wert und einem dem permanenten Zertifikat zugehörigen öffentlichen Schlüssel des Terminals (118), wobei der Terminal-Hash Wert einen Hash von Metadaten des Zertifikats umfasst,
- Empfang eines sitzungsgebundenen öffentlichen Schlüssels des Terminals (118),
- Erzeugung und Senden eines zufälligen ersten Geheimnisses an das Terminal,
- Empfang einer zweiten Signatur von dem Terminal (118) und Verifizierung der zweiten Signatur unter Verwendung des sitzungsgebundenen öffentlichen Schlüssels des Terminals (118), des zufälligen ersten Geheimnisses und dem dem permanenten Zertifikat zugehörigen öffentlichen Schlüssel des Terminals (118),
- Nach erfolgreicher Verifizierung der ersten und zweiten Signatur, Speichern des Terminal Hash-Wertes in dem ID-Token (100) und Freigabe des Zugriffs des Terminals (118) auf das Attribut (112).

2. Verfahren nach Anspruch 1, wobei die Metadaten eine Zugriffsberechtigung umfassen, wobei durch den ID-Token
- im Falle dessen der Terminal Hash-Wert in dem ID-Token (100) nicht gültig gespeichert ist nach der erfolgreichen Verifizierung der ersten und zweiten Signatur die Zugriffsberechtigung verknüpft mit dem Terminal Hash-Wert in dem ID-Token (100) gespeichert wird und die Freigabe des Zugriffs des Terminals (118) auf das Attribut (112) entsprechend der Zugriffsberechtigung erfolgt,
- im Falle dessen der Terminal Hash-Wert in dem ID-Token (100) gültig gespeichert ist die mit dem Terminal Hash-Wert verknüpft gespeicherte Zugriffsberechtigung gelesen wird und die Freigabe des Zugriffs des Terminals (118) auf das Attribut (112) entsprechend der Zugriffsberechtigung erfolgt.

3. Verfahren nach einem der vorigen Ansprüche, wobei dem permanenten Zertifikat ein permanenter öffentlicher Schlüssel des Terminals (118) zugeordnet ist, wobei durch den ID-Token
- im Falle dessen der Terminal Hash-Wert in dem ID-Token (100) nicht gültig gespeichert ist nach der erfolgreichen Verifizierung der ersten und zweiten Signatur der permanente öffentliche Schlüssel verknüpft mit dem Terminal Hash-Wert in dem ID-Token (100) gespeichert wird und eine weitere Kommunikation mit dem Terminal (118) verschlüsselt unter Verwendung des permanenten öffentlichen Schlüssels des Terminals (118) erfolgt,
- im Falle dessen der Terminal Hash-Wert in dem ID-Token (100) gültig gespeichert ist der mit dem Terminal Hash-Wert verknüpft gespeicherte permanente öffentliche Schlüssel des Terminals (118) gelesen wird und eine weitere Kommunikation mit dem Terminal (118) verschlüsselt unter Verwendung des permanenten öffentlichen Schlüssels des Terminals (118) erfolgt.

4. Verfahren nach Anspruch 3, wobei der permanente öffentliche Schlüssel des Terminals (118) in dem permanenten Zertifikat enthalten ist, wobei der Terminal-Hash Wert einen Hash des permanenten öffentlichen Schlüssels umfasst.

5. Verfahren nach einem der vorigen Ansprüche, wobei durch den ID-Token
- im Falle dessen der Terminal Hash-Wert in dem ID-Token (100) nicht gültig gespeichert ist nach der erfolgreichen Verifizierung der ersten und zweiten Signatur der permanente öffentliche Schlüssel verknüpft mit einem Zeitstempel in dem ID-Token (100) gespeichert wird, wobei der Zeitstempel eine maximale Gültigkeitsdauer des Terminal Hash-Werts angibt,
- im Falle dessen der Terminal Hash-Wert in dem ID-Token (100) gespeichert ist der mit dem Terminal Hash-Wert verknüpft gespeicherte Zeitstempel gelesen wird und eine gültige Speicherung des Terminal Hash-Werts nur dann gegeben ist, wenn der Zeitstempel noch gültig ist.

6. Verfahren nach Anspruch 5, wobei die Metadaten den Zeitstempel aufweisen.

7. Verfahren nach Anspruch 5, wobei der Zeitstempel für das Speichern des Terminal Hash-Wertes in dem ID-Token (100) erzeugt wird, wobei der Zeitstempel auf Basis einer vordefinierten relativen Gültigkeitsdauer erzeugt wird.

8. Verfahren nach einem der vorigen Ansprüche, wobei das permanente Zertifikat des Terminals (118) in einer ersten Nachricht durch den ID-Token (100) von dem Terminal (118) empfangen wird, wobei die erste Nachricht ein Wurzelzertifikat umfasst, wobei im Falle dessen der Terminal Hash-Wert in dem ID-Token (100) nicht gültig gespeichert ist die Authentisierung durch den ID-Token (100) ferner eine Verifizierung des permanenten Zertifikats des Terminals (118) über das Wurzelzertifikat mittels eines auf dem ID-Token (100) gespeicherten öffentlichen Schlüssels einer Wurzelzertifizierungsstelle umfasst, wobei erst nach erfolgreicher Verifizierung des permanenten Zertifikats des Terminals (118) über das Wurzelzertifikat das Speichern des Terminal Hash-Wertes in dem ID-Token (100) und Freigabe des Zugriffs des Terminals (118) auf das Attribut (112) erfolgt.

9. Verfahren nach Anspruch 8, wobei die erste Nachricht ohne eine vorherige von dem Terminal (118) empfange Ankündigung der Referenz der Zertifizierungsstelle des permanenten Zertifikats empfangen wird.

10. Verfahren nach einem der vorigen Ansprüche, wobei das erste Geheimnis ohne eine explizite Anforderung des Terminals (118) abwartend automatisch nach Empfang des sitzungsgebundenen öffentlichen Schlüssels des Terminals (118) erzeugt und an das Terminal (118) gesendet wird.

11. Verfahren nach einem der vorigen Ansprüche, ferner mit einer Authentisierung des ID-Tokens gegenüber dem Terminal, wobei die Authentisierung durch den ID-Token (100) umfasst:
- Senden des öffentlichen Schlüssels des ID-Token (100) und einen zu dem öffentlichen Schlüssel zugehörigen Domain-Parameter an das Terminal, wobei entweder der öffentliche Schlüssel des ID-Token (100) automatisch und ohne eine vorherige explizite Anforderung seitens des Terminals (118) gesendet wird oder der ID-Token (100) über mehrere verschiedene öffentliche Schlüssel verfügt, einer dieser verschiedenen öffentlichen Schlüssel als Standart-Schlüssel definiert ist und bei Empfang einer allgemeinen Anforderung eines öffentlichen Schlüssels seitens des Terminals (118) der Standart-Schlüssel als der öffentliche Schlüssel des ID-Tokens an das Terminal (118) gesendet wird,
- Berechnen eines mit dem Terminal (118) gemeinsamen zweiten Geheimnisses aus dem privaten Schlüssel des ID-Tokens, dem sitzungsgebundenen öffentlichen Schlüssels des Terminals (118) und dem Domain-Parameter,
- Erzeugen eines zufälligen dritten Geheimnisses, senden des zufälligen dritten Geheimnisses an das Terminal (118) und Berechnen eines symmetrischen Sitzungsschlüssels aus dem dritten Geheimnis und dem mit dem Terminal (118) gemeinsamen zweiten Geheimnis,
wobei die weitere nachfolgende Kommunikation mit dem Zugriff auf das Attribut (112) verschlüsselt mit dem symmetrischen Sitzungsschlüssel erfolgt.

12. ID-Token (100) mit einer Kommunikationsschnittstelle, einem Prozessor und einem computerlesbaren Speichermedium, wobei das Speichermedium computerlesbare Instruktionen enthält, welche bei Ausführung durch den Prozessor die Durchführung eines Verfahrens nach einem der vorigen Ansprüche bewirken.

13. Verfahren zur Freigabe eines Zugriffs auf eine zugriffsbeschränkte Sicherungsanlage (144) mittels eines ID-Tokens, wobei das Verfahren umfasst:
- Durchführung des Verfahrens nach einem der vorigen Ansprüche 1-11 durch den ID-Token (100),
- Nach Freigabe des Zugriffs des Terminals (118) auf das Attribut (112), lesen des Attributs (112) durch das Terminal (118) und versenden einer Zugriffsanfrage an einen Authentifizierungsserver (130), wobei die Zugriffsanfrage das Attribut (112) verschlüsselt umfasst,
- Entschlüsselung und Überprüfung des Attributs (112) durch den Authentifizierungsserver (130), wobei der Authentifizierungsserver (130) im Fall einer erfolgreichen Überprüfung den Zugriff auf die Sicherungsanlage (144) freigibt.

14. Sicherheitssystem umfassend einen ID-Token (100) nach Anspruch 12, sowie eine zugriffsbeschränkte Sicherungsanlage (144), ein Terminal (118) und einen Authentifizierungsserver (130),
- wobei das Terminal (118) dazu ausgebildet ist, nach Freigabe des Zugriffs des Terminals (118) auf das Attribut (112) das Attribut (112) zu lesen und eine Zugriffsanfrage an den Authentifizierungsserver (130) zu versenden, wobei die Zugriffsanfrage das Attribut (112) verschlüsselt umfasst,
- wobei der Authentifizierungsserver (130) dazu ausgebildet ist, eine Entschlüsselung und Überprüfung des Attributs (112) durchzuführen und im Fall einer erfolgreichen Überprüfung den Zugriff auf die Sicherungsanlage (144) freizugeben.

## Claims

1. A computer-implemented method for controlling access of a terminal (118) to an attribute (112) stored in an ID token (100), the ID token (100) being associated with a user, the method comprising authenticating the terminal (118) by the ID token (100), the authentication by the ID token (100) comprising receiving a permanent certificate of the terminal (118), deriving a terminal hash value from the certificate and checking whether the terminal hash value is validly stored in the ID token (100), if the terminal hash value is validly stored in the ID token (100), access of the terminal (118) to the attribute (112) being granted without further checking the permanent certificate of the terminal (118), and if the terminal hash value is not validly stored in the ID token (100), the authentication by the ID token (100) comprising:
- deriving a first signature from the permanent certificate of the terminal (118), and verifying the first signature with the terminal hash value and a public key of the terminal (118) associated with the permanent certificate, wherein the terminal hash value comprises a hash of metadata of the certificate;
- receiving a session-specific public key of the terminal (118);
- generating and transmitting a random first secret to the terminal;
- receiving a second signature from the terminal (118), and verifying the second signature using the session-specific public key of the terminal (118), the random first secret and the public key of the terminal (118) associated with the permanent certificate; and
- following successful verification of the first and second signatures, storing the terminal hash value in the ID token (100), and granting access of the terminal (118) to the attribute (112).

2. The method according to claim 1, wherein the metadata comprise an access authorization, the ID token,
- if the terminal hash value is not validly stored in the ID token (100), following the successful verification of the first and second signatures, storing the access authorization in the ID token (100) in a manner linked with the terminal hash value, and granting access of the terminal (118) to the attribute (112) in accordance with the access authorization; and
- if the terminal hash value is validly stored in the ID token, (100), reading the access authorization stored in a manner linked with the terminal hash value, and granting access of the terminal (118) to the attribute (112) in accordance with the access authorization.

3. A method according to any one of the preceding claims, wherein a permanent public key of the terminal (118) is assigned to the permanent certificate, the ID token,
- if the terminal hash value is not validly stored in the ID token (100), following the successful verification of the first and second signatures, storing the permanent public key in the ID token (100) in a manner linked with the terminal hash value, and carrying out further communication with the terminal (118) in an encrypted manner, using the permanent public key of the terminal (118); and
- if the terminal hash value is validly stored in the ID token (100), reading the permanent public key of the terminal (118) stored in a manner linked with the terminal hash value, and carrying out further communication with the terminal (118) in an encrypted manner, using the permanent public key of the terminal (118).

4. The method according to claim 3, wherein the permanent public key of the terminal (118) is contained in the permanent certificate, the terminal hash value comprising a hash of the permanent public key.

5. A method according to any one of the preceding claims, wherein the token,
- if the terminal hash value is not validly stored in the ID token, (100) following the successful verification of the first and second signatures, stores the permanent public key in the ID token (100) in a manner linked with a time stamp, wherein the time stamp specifies a maximum period of validity of the terminal hash value; and
- if the terminal hash value is stored in the ID token (100), reads the time stamp stored in a manner linked with the terminal hash value, and the terminal hash value is deemed to be validly stored only if the time stamp is still valid.

6. The method according to claim 5, wherein the metadata comprise the time stamp.

7. The method according to claim 5, wherein the time stamp is generated for storing the terminal hash value in the ID token (100), the time stamp being generated based on a predefined relative period of validity.

8. A method according to any one of the preceding claims, wherein the permanent certificate of the terminal (118) is received by the ID token (100) from the terminal (118) in a first message, the first message comprising a root certificate, if the terminal hash value is not validly stored in the ID token (100), the authentication by the ID token (100) furthermore comprising verifying the permanent certificate of the terminal (118) via the root certificate by way of a public key of a root certification authority stored on the ID token (100), the terminal hash value being stored in the ID token (100) and access of the terminal (118) to the attribute (112) being granted only following the successful verification of the permanent certificate of the terminal (118) via the root certificate.

9. The method according to claim 8, wherein the first message is received without prior announcement of the reference of the certification authority of the permanent certificate received by the terminal (118).

10. A method according to any one of the preceding claims, wherein the first secret is automatically generated upon receipt of the session-specific public key of the terminal (118), without waiting for an explicit request of the terminal (118), and is transmitted to the terminal (118).

11. A method according to any one of the preceding claims, furthermore comprising authenticating the ID token with respect to the terminal, the authentication by the ID token (100) comprising:
- transmitting the public key of the ID token (100) and a domain parameter associated with the public key to the terminal, wherein either the public key of the ID token (100) is automatically transmitted without a prior explicit request on the part of the terminal (118), or the ID token (100) has a plurality of different public keys, one of these different public keys is defined as a standard key, and the standard key is transmitted as the public key of the ID token to the terminal (118) upon receipt of a general request for a public key on the part of the terminal (118);
- calculating a second secret, which is shared with the terminal (118), from the private key of the ID token, the session-specific public key of the terminal (118), and the domain parameter; and
- generating a random third secret, transmitting the random third secret to the terminal (118), and calculating a symmetric session key from the third secret and the second secret shared with the terminal (118),
the further subsequent communication taking place with access to the attribute (112) in an encrypted manner using the symmetric session key.

12. An ID token (100), comprising a communication interface, a processor, and a computer-readable storage medium, the storage medium comprising computer-readable instructions which, when carried out by the processor, prompt the execution of a method according to any one of the preceding claims.

13. A method for granting access to an access-restricted security facility (144) by way of an ID token, the method comprising:
- carrying out the method according to any one of the preceding claims 1-11 by the ID token (100);
- following access of the terminal (118) to the attribute (112) being granted, reading the attribute (112) by the terminal (118), and transmitting an access request to an authentication server (130), wherein the access request comprises the attribute (112) in encrypted form; and
- decrypting and checking the attribute (112) by the authentication server (130), wherein the authentication server (130) grants access to the security facility (144) in the event of a successful check.

14. A security system comprising an ID token (100) according to claim 12, as well as an access-restricted security facility (144), a terminal (118), and an authentication server (130),
- the terminal (118) being designed, following access of the terminal (118) to the attribute (112) being granted, to read the attribute (112), and to transmit an access request to the authentication server (130), wherein the access request comprises the attribute (112) in encrypted form; and
- the authentication server (130) being designed to decrypt and check the attribute (112), and to grant access to the security facility (144) in the event of a successful check.

## Revendications

1. Procédé mis en œuvre par ordinateur pour la commande de l'accès d'un terminal (118) à un attribut (112) stocké dans un jeton d'ID (100), le jeton d'ID (100) étant associé à un utilisateur, le procédé comprenant une authentification du terminal (118) par le jeton d'ID (100), l'authentification par le jeton d'ID (100) comprenant la réception d'un certificat permanent du terminal (118), la dérivation d'une valeur de hachage de terminal à partir du certificat et une vérification si la valeur de hachage de terminal est stockée valide dans le jeton d'ID (100), où, dans le cas où la valeur de hachage de terminal est stockée valide dans le jeton d'ID (100), une libération d'un accès du terminal (118) à l'attribut (112) a lieu sans autre vérification du certificat permanent du terminal (118), où, dans le cas où la valeur de hachage de terminal n'est pas stockée valide dans le jeton d'ID (100), l'authentification par le jeton d'ID (100) comprend :
- la dérivation d'une première signature à partir du certificat permanent du terminal (118) et la vérification de la première signature avec la valeur de hachage de terminal et d'une clé publique du terminal (118) associée au certificat permanent, où la valeur de hachage de terminal comprend un hachage de métadonnées du certificat,
- la réception d'une clé publique du terminal (118) associé à la session,
- la création et l'envoi d'un premier secret aléatoire au terminal,
- la réception d'une deuxième signature par le terminal (118) et la vérification de la deuxième signature moyennant l'emploi de la clé publique du terminal (118) associée à la session, du premier secret aléatoire et de la clé publique du terminal (118) associée au certificat permanent,
- après la vérification réussie des première et deuxième signatures, le stockage de la valeur de hachage de terminal dans le jeton d'ID (100) et la libération de l'accès du terminal (118) à l'attribut (112).

2. Procédé selon la revendication 1, dans lequel les métadonnées comprennent une autorisation d'accès, dans lequel, par le jeton d'ID),
- dans le cas où la valeur de hachage de terminal n'est pas stockée valide dans le jeton d'ID (100) après la vérification réussie des première et deuxième signatures, l'autorisation d'accès est stockée dans le jeton d'ID (100) couplée avec la valeur de hachage de terminal et la libération de l'accès du terminal (118) à l'attribut (112) a lieu de manière conforme à l'autorisation d'accès,
- dans le cas où la valeur de hachage de terminal est stockée valide dans le jeton d'ID (100), l'autorisation d'accès stockée dans le jeton d'ID (100) couplée avec la valeur de hachage de terminal est lue et la libération de l'accès du terminal (118) à l'attribut (112) a lieu de manière conforme à l'autorisation d'accès.

3. Procédé selon l'une des revendications précédentes, dans lequel une clé publique permanente du terminal (118) est associée au certificat permanent, dans lequel, par le jeton d'ID,
- dans le cas où la valeur de hachage de terminal n'est pas stockée valide dans le jeton d'ID (100) après la vérification réussie des première et deuxième signatures, la clé publique permanente est stockée dans le jeton d'ID (100) couplée avec la valeur de hachage de terminal et une nouvelle communication a lieu avec le terminal (118) de manière cryptée moyennant l'emploi de la clé publique permanente du terminal (118),
- dans le cas où la valeur de hachage de terminal est stockée valide dans le jeton d'ID (100), la clé publique permanente du terminal (118) couplée avec la valeur de hachage de terminal, est lue et une nouvelle communication a lieu cryptée avec le terminal (118) moyennant l'emploi de la clé publique permanente du terminal (118).

4. Procédé selon la revendication 3, dans lequel la clé publique permanente du terminal (118) est contenue dans le certificat permanent, où la valeur de hachage de terminal comprend un hachage de la clé publique permanente.

5. Procédé selon l'une des revendications précédentes, dans lequel, par le jeton d'ID,
- dans le cas où la valeur de hachage de terminal n'est pas stockée valide dans le jeton d'ID (100) après la vérification réussie des première et deuxième signatures, la clé publique permanente est stockée dans le jeton d'ID (100) couplée avec un horodatage, où l'horodatage indique une durée de validité maximale de la valeur de hachage de terminal,
- dans le cas où la valeur de hachage de terminal est stockée dans le jeton d'ID (100), l'horodatage stocké couplé avec la valeur de hachage de terminal est lu et un stockage valide de la valeur de hachage de terminal n'est alors donné que si l'horodatage est encore valide.

6. Procédé selon la revendication 5, dans lequel les métadonnées présentent l'horodatage.

7. Procédé selon la revendication 5, dans lequel l'horodatage est créé pour le stockage de la valeur de hachage de terminal dans le jeton d'ID (100), dans lequel l'horodatage est créé sur la base d'une durée de validité relative prédéfinie.

8. Procédé selon l'une des revendications précédentes, dans lequel le certificat permanent du terminal (118) est reçu par le terminal (118) dans un premier message par le jeton d'ID (100), où le premier message comprend un certificat racine, dans lequel, dans le cas où la valeur de hachage n'est pas stockée valide dans le jeton d'ID (100), l'authentification par le jeton d'ID (100) comprend en outre une vérification du certificat permanent du terminal (118) par le biais du certificat racine au moyen d'une clé publique stockée sur le jeton d'ID (100) d'un point de certification racine, dans lequel, après la vérification réussie du certificat permanent du terminal (118) par le biais du certificat racine, le stockage de la valeur de hachage de terminal dans le jeton d'ID (100) et la libération de l'accès du terminal (118) à l'attribut (112) ont lieu.

9. Procédé selon la revendication 8, dans lequel le premier message est reçu sans un avis précédent reçu par le terminal (118) de la référence du point de certification du certificat permanent.

10. Procédé selon l'une des revendications précédentes, dans lequel le premier secret est créé automatiquement sans attendre une demande explicite du terminal (118) après la réception de la clé publique associée à la session du terminal (118) et est envoyé au terminal (118).

11. Procédé selon l'une des revendications précédentes, avec en outre une authentification du jeton d'ID vis-à-vis du terminal, où l'authentification par le jeton d'ID (100) comprend :
- l'envoi de la clé publique du jeton d'ID (100) et d'un paramètre de domaine associé à la clé publique au terminal, où, soit la clé publique du jeton d'ID (100) est envoyée automatiquement et sans une demande préalable explicite du côté du terminal (118), soit le jeton d'ID (100) dispose de plusieurs clés publiques différentes, une de ces clés publiques différentes est définie comme la clé standard et la clé standard est envoyée lors de la réception d'une demande générale d'une clé publique de la part du terminal (118) en tant que clé publique du jeton d'ID au terminal (118),
- le calcul d'un deuxième secret commun avec le terminal (118) à partir de la clé privée du jeton d'ID, de la clé publique du terminal (118) associée à la session et du paramètre de domaine,
- la création d'un troisième secret aléatoire, l'envoi du troisième secret aléatoire au terminal (118) et le calcul d'une clé de session symétrique à partir du troisième secret et du deuxième secret commun avec le terminal (118),
dans lequel une nouvelle communication ultérieure a lieu cryptée avec l'accès à l'attribut (112) avec la clé de session symétrique.

12. Jeton d'ID (100) doté d'une interface de communication, d'un processeur et d'un support de stockage lisible par ordinateur, où le support de stockage contient des instructions lisibles par ordinateur, lesquelles, lors de l'exécution par le processeur, provoque la réalisation d'un procédé selon l'une des revendications précédentes.

13. Procédé de libération d'un accès à une installation de sécurité (144) d'accès restreint au moyen d'un jeton d'ID, le procédé comprenant :
- l'exécution du procédé selon l'une des revendications précédentes 1 à 11 par le jeton d'ID (100),
- après la libération de l'accès du terminal (118) à l'attribut (112), la lecture de l'attribut (112) par le terminal (118) et l'envoi d'une demande d'accès à un serveur d'authentification (130), où la demande d'accès comprend l'attribut (112) à l'état crypté,
- le décryptage et la vérification de l'attribut (112) par le serveur d'authentification (130), où le serveur d'authentification (130) libère l'accès à l'installation de sécurité (144) dans le cas d'une vérification réussie.

14. Système de sécurité comprenant un jeton d'ID (100) selon la revendication 12, ainsi qu'une installation de sécurité (144) à accès restreint, un terminal (118) et un serveur d'authentification (130),
- dans lequel le terminal (118) est conçu pour, après la libération de l'accès du terminal (118) à l'attribut (112), lire l'attribut (112), et envoyer une demande d'accès au serveur d'authentification (130), où la demande d'accès comprend l'attribut (112) à l'état crypté,
- dans lequel le serveur d'authentification (130) est conçu pour exécuter un décryptage et une vérification de l'attribut (112) et dans le cas d'une vérification réussie, libérer l'accès à l'installation de sécurité (144).
